# EUROPÄISCHE PATENTSCHRIFT

(11) **EP 2 543 567 B1**
(45) Veröffentlichungstag und Bekanntmachung des Hinweises auf die Patenterteilung: **01.01.2020**
(21) Anmeldenummer: 12004545.5
(22) Anmeldetag: 16.06.2012
(51) Int. Cl.: B60T 10/02, F16D 57/04

(54) **Verfahren zum Begrenzen der maximal abrufbaren Bremsleistung eines hydrodynamischen Retarders**
Method for limiting the maximum possible braking power of a hydrodynamic retarder
Procédé de limitation de la puissance maximale de freinage pouvant être interrogée d'un retardateur hydrodynamique

(30) Priorität: 06.07.2011 DE 102011107288
(43) Veröffentlichungstag der Anmeldung: 09.01.2013
(73) Patentinhaber: Voith Patent GmbH, 89522 Heidenheim (DE)
(72) Erfinder: Bischoff, Markus, 74405 Gaildorf-Ottendorf (DE); Geier, Thomas, 88477 Schwendi (DE); Wassermann, Mirco, 74544 Michelbach an der Blitz (DE)
(74) Vertreter: Dr. Weitzel & Partner

(56) Entgegenhaltungen:
- EP-A2- 2 048 052
- DE-A1-102008 034 974
- DE-A1-102009 037 057

## Beschreibung

Die Erfindung betrifft ein Verfahren zum Begrenzen der maximal aktuell abrufbaren Bremsleistung eines hydrodynamischen Retarders in einem Kraftfahrzeug, wenn die von dem hydrodynamischen Retarder erzeugte Wärme mittels dem Kühlmittel in einem Motorkühlkreislauf des Kraftfahrzeugs abgeleitet wird, im Einzelnen gemäß dem Oberbegriff des Anspruchs 1.

Derartige hydrodynamische Retarder sind bekannt. Sie erzeugen im Betrieb aufgrund von Flüssigkeitsreibung Wärme, welche abgeführt werden muss. Wird ein solcher hydrodynamischer Retarder in einem Kraftfahrzeug angeordnet, so wird dieser in der Regel über den Motorkühlkreislauf gekühlt, das heißt, das Kühlmittel im Motorkühlkreislauf wird entweder unmittelbar als Arbeitsmedium des hydrodynamischen Retarders genutzt oder zur Kühlung des Arbeitsmediums des hydrodynamischen Retarders über einen Wärmetauscher verwendet. Die vorliegende Erfindung betrifft nur solche Retarder, die im Motorkühlkreislauf angeordnet sind und somit das Kühlmittel des Motorkühlkreislaufes zugleich das Arbeitsmedium des hydrodynamischen Retarders ist.

Beim Betrieb des hydrodynamischen Retarders können Betriebszustände auftreten, in denen das Arbeitsmedium schnell aufgeheizt wird. Eine zu hohe Temperatur des Arbeitsmediums und damit des Kühlmittels des Motorkühlkreislaufes kann jedoch zu einer Schädigung des Retarders oder von anderen im gemeinsamen Kühlkreislauf angeordneten Aggregaten führen. Mit zunehmender Bremsleistung wird der Wärmeeintrag des Retarders in das Kühlmittel erhöht, wobei in Zuständen mit einem großen Kühlmitteldurchsatz im Kühlkreislauf auch ein großer Wärmeeintrag nur zu einem vertretbaren Temperaturanstieg führt, jedoch bei einem geringen Durchsatz das Einstellen einer großen Bremsleistung des Retarders zu einer unzulässig hohen Temperatur führen kann.

Um derartige ungünstige Betriebszustände zu vermeiden, sind in der Vergangenheit verschiedene Ansätze vorgeschlagen worden. So wird zum Beispiel die Kühlmitteltemperatur mittels Temperatursensoren erfasst und überwacht, sodass bei Erreichen einer unteren Grenztemperatur, welche vorliegend als Regeleingriffstemperatur bezeichnet wird, die maximale aktuelle von dem hydrodynamischen Retarder abrufbare Bremsleistung vermindert wird, um den Wärmeeintrag in das Kühlmittel durch den hydrodynamischen Retarder zu verringern. Auf diese Weise können sehr schnelle Temperaturerhöhungen, die zu einem Überschwingen der Temperatur im Motorkühlkreislauf führen würden, verringert werden. Um entsprechende Überschwinger zu begrenzen und zugleich die notwendige Abregelung der Retarderleistung zu minimieren, wurden verschiedene Verfahren vorgeschlagen, siehe beispielsweise DE 10 2006 036 185 B3 und DE 197 16 922 A1. Die DE 197 16 922 A1 beschreibt zusätzlich die Erfassung weiterer Parameter, wie der Umgebungs- oder Gehäusetemperatur, des Druckes im Kühlsystem sowie der Lüfter- oder Wasserpumpendrehzahl mittels geeigneter Sensoren. Hierfür ist im Ausgleichsbehälter des Kühlkreislaufs eines solchen hydrodynamischen Retarders ein Drucksensor angeordnet.

Die DE 10 2008 034 974 A1 beschreibt ein Verfahren zum Einstellen der Leistungsübertragung eines hydrodynamischen Retarders, mittels welchem zum Einstellen des Steuerdruckes zusätzlich ein Druck des Arbeitsmediums in einem Raum innerhalb des hydrodynamischen Retarders (Gehäusedruck) berücksichtigt wird. Dabei ist eine Kennlinie oder ein Kennfeld vorgesehen, welche/welches einer bestimmten Verzögerung einen entsprechenden Steuerdruck als Stellgröße zuordnet. Zur hydrodynamischen Drehmomentübertragung wird das Arbeitsmedium im Rotor radial nach außen beschleunigt und tritt in den Stator ein, in welchem es radial nach innen strömend verzögert wird. Der Gehäusedruck entspricht somit dem Druck, welcher infolge des dynamischen Strömungsprozesses im Arbeitsraum vorherrscht. Da der Arbeitsraum zum Abführen von Arbeitsmedium mit dem Auslass strömungsleitend verbunden ist, liegt am Auslass ein zum Gehäusedruck proportionaler Auslassdruck an, sodass der Steuerdruck in Abhängigkeit des Auslassdruckes eingestellt wird.

Obwohl die bekannten Verfahren inzwischen die verfügbare Bremsleistung auch in ungünstigen thermischen Betriebszuständen maximieren und unzulässig hohe Temperaturwerte des Kühlmittels verhindert werden können, konnte durch Untersuchungen festgestellt werden, dass Betriebsbereiche existieren, in denen es zu einer unerwünschten Reduzierung des Retarderbremsmomentes kommt, und zwar ohne einen zugehörigen deutlichen Temperaturanstieg des Arbeitsmediums. Die Ursache hierfür war zunächst unklar.

Der vorliegenden Erfindung liegt die Aufgabe zugrunde, ein Verfahren zum Begrenzen der maximal abrufbaren Bremsleistung eines hydrodynamischen Retarders anzugeben, welches die genannten Leistungs- beziehungsweise Drehmomenteinbrüche verhindert.

Die erfindungsgemäße Aufgabe wird durch ein Verfahren gemäß dem unabhängigen Anspruch gelöst. Die abhängigen Ansprüche beschreiben vorteilhafte und besonders zweckmäßige Ausgestaltungen des erfindungsgemäßen Verfahrens.

Mittels des erfindungsgemäßen Verfahrens wird die maximale aktuell abrufbare Bremsleistung eines hydrodynamischen Retarders begrenzt, was auch als Temperaturabregelung bekannt ist. Das bedeutet, es wird nicht die generell maximal verfügbare Bremsleistung des hydrodynamischen Retarders eines bestimmten Bautyps, sozusagen dessen Maximalmoment, begrenzt, sondern es folgt eine dynamische Temperaturabregelung in Abhängigkeit der aktuell vorliegenden Randbedingungen.

Wenn vorliegend davon die Rede ist, dass Bremsleistung abgerufen wird, so kann dies beispielsweise automatisch durch ein Steuergerät oder manuell durch einen Fahrer geschehen. Die Bremsleistung des hydrodynamischen Retarders kann beispielsweise dadurch abgerufen werden, dass ein Fahrer einen Wählhebel betätigt, um eine bestimmte Bremsstufe einzustellen. Diese Betätigung wird von dem Steuergerät erfasst, welches den hydrodynamischen Retarder beispielsweise über ein Druckluftsystem derart ansteuert, dass eine bestimmte Arbeitsmediummenge im Arbeitsraum des hydrodynamischen Retarders eingestellt wird. Über eine sich im Arbeitsraum ausbildende Kreislaufströmung des Arbeitsmediums wird die gewünschte Bremsleistung erzeugt, was ein gegebenes Bremsmoment liefert.

Es ist auch denkbar, dass eine automatische Steuerung beispielsweise aufgrund bestimmter erfasster Fahrsituationen erfolgt. Dabei kann das Steuergerät in Abhängigkeit bestimmter Fahrsituationen feststellen, ob aktuell ein hydrodynamisches Bremsen vorteilhaft ist. Das hydrodynamische Bremsen wird dann automatisch eingeleitet, ohne dass der Fahrer aktiv werden muss.

Durch die sich im Bremsbetrieb aufgrund der Kreislaufströmung ergebende Flüssigkeitsreibung wird in dem hydrodynamischen Retarder Wärme erzeugt, welche über den Motorkühlkreislauf abgeführt wird. Dabei können Betriebszustände des Kraftfahrzeugs auftreten, in denen beispielsweise aufgrund eines geringen Durchsatzes der Kühlmittelpumpe, mittels der das Kühlmittel im Motorkühlkreislauf umgewälzt wird und welche vom Fahrzeugantriebsmotor oder einem zusätzlich hierzu vorgesehenen Motor, insbesondere Elektromotor angetrieben wird, oder durch einen aktuellen großen Temperatureintrag anderer Aggregate in den Kühlkreislauf oder eine geringe Abführung von Wärme aus dem Kühlkreislauf eine unzulässige Temperaturerhöhung des Kühlmittels auftritt, wenn die angeforderte Bremsleistung tatsächlich umgesetzt wird. In diesem Fall kann die Bremsanforderung nicht in voller Höhe umgesetzt werden, sondern es wird die maximal abrufbare Bremsleistung des hydrodynamischen Retarders, welche eine obere Schranke darstellt, eingestellt. Solange die konkret abgerufene Bremsleistung unterhalb dieser Schranke liegt, wird die Bremsanforderung vollständig umgesetzt. Ansonsten wird nur die maximal zulässige Bremsleistung eingestellt.

Der hydrodynamische Retarder weist ein angetriebenes Primärschaufelrad und ein Sekundärschaufelrad auf, die miteinander einen torusförmigen, wahlweise über einen Einlass mit Arbeitsmedium befüllbaren und über einen Auslass entleerbaren Arbeitsraum ausbilden, um Drehmoment hydrodynamisch vom Primärschaufelrad auf das Sekundärschaufelrad zu übertragen, wobei das Kühlmedium des Motorkühlkreislaufs zugleich das Arbeitsmedium des hydrodynamischen Retarders ist.

Gemäß einer Ausführungsform des erfindungsgemäßen Verfahrens wird zunächst die Temperatur des Kühlmittels kontinuierlich oder in zeitlichen, insbesondere regelmäßigen Abständen erfasst.

Erfindungsgemäß wird der aktuelle Einlassdruck im Bereich des Einlasses und/oder im Inneren des hydrodynamischen Retarders erfasst oder aus wenigstens einer weiteren Zustandsgröße des Kühlmittels berechnet, wobei die maximal abrufbare Bremsleistung des hydrodynamischen Retarders in Abhängigkeit des aktuellen Einlassdruckes verändert wird.

Mit aktueller Einlassdruck im Sinne der vorliegenden Erfindung ist jener aktuell vorherrschende Arbeitsmediumdruck gemeint, welcher in Strömungsrichtung des Arbeitsmediums gesehen vor, im oder hinter dem Einlass des Retarders ansteht.

Unter einem im Inneren des hydrodynamischen Retarders anstehenden Druck wird der sich im Betrieb des hydrodynamischen Retarders im Inneren eines Gehäuses des Retarders einstellende Arbeitsmediumdruck (Gehäuseinnendruck) verstanden. Mit der Zustandsgröße des Kühlmittels im Sinne der vorliegenden Erfindung ist eine physikalische Größe gemeint, mittels welcher sich die Aggregatzustände des Kühlmittels beschreiben lassen. Zu diesen zählen hierbei insbesondere ausschließlich der Druck, das Volumen sowie die Temperatur des Kühlmittels.

Die Erfinder haben erkannt, dass für die Drehmomenteinbrüche und somit die kurzfristig fallende Bremsleistung Druckschwankungen im Inneren des Retarders verantwortlich sind. Dabei treten bei einem zu geringen Einlassdruck im Einlass oder im Inneren des Retarders unerwünschte Dampfblasen auf. Diese Dampfblasenbildung rührt daher, dass im Inneren des Retarders der Dampfdruck des Kühlmittels lokal unterschritten wird, sodass dieses teilweise verdampft. Diese unerwünschte Dampfblasenbildung ist bei gegenüber der Umgebung abgeschlossenen Wasserretardern zu unterscheiden von der sich bei Teilfüllung im Arbeitsraum bildenden Dampfblase im Zentrum des Arbeitsmediumkreislaufes im Arbeitsraum beziehungsweise bei der dort angenommenen Zweiphasenströmung. Dies bewirkt einen für die Steuerung nicht erkennbaren Momenteneinbruch.

Die Siedetemperatur des Kühlmittels wird in Abhängigkeit des Einlassdruckes oder in Abhängigkeit des Druckes im Inneren des hydrodynamischen Retarders, vorzugsweise außerhalb des Zentrums der Kreislaufströmung im Arbeitsraum oder alternativ auch in diesem (auch als Kernring des Retarders bezeichnet) bestimmt und die maximal abrufbare Bremsleistung des hydrodynamischen Retarders derart begrenzt, dass die Temperatur des Kühlmittels kleiner als die Siedetemperatur bei dem aktuellen Einlassdruck beziehungsweise bei dem aktuellen Druck im Inneren des Retarders ist.

Vorteilhaft wird der Einlassdruck aus einer oder mehrerer der folgenden Größen berechnet:
- Überdruck im Motorkühlkreislauf;
- aktuelle Drehzahl einer im Motorkühlkreislauf angeordneten und das Kühlmittel umwälzenden, vom Fahrzeugantriebsmotor oder einem anderen Motor angetriebenen Kühlmittelpumpe;
- Steuerdruck zum veränderbaren Einstellen eines Füllungsgrades von Arbeitsraum im Arbeitsraum des hydrodynamischen Retarders;
- aktuelle Drehzahl des Primärschaufelrades des hydrodynamischen Retarders oder einer mit dem Primärschaufelrad in Triebverbindung stehenden Welle.

Eine mit dem Primärschaufelrad in Triebverbindung stehenden Welle kann beispielsweise eine Gelenkwelle zum Antrieb der Räder des Fahrzeugs sein. Auf diese Weise kann bei Vorsehen entsprechender Sensoren auf den Einlassdruck auch indirekt geschlossen werden, ohne diesen direkt messen zu müssen.

Die Berechnung des Einlassdruckes kann auch vereinfacht erfolgen, in dem nur die aktuelle Drehzahl eine im Motorkühlkreislauf angeordneten Kühlmittelpumpe und der Überdruck im Motorkühlkreislauf, der beispielsweise in einem Vorratsbehälter des Kühlmittels erfasst werden kann, berücksichtigt werden und die Parametersteuerdruck des Retarders und Drehzahl des Primärschaufelrades des Retarders als konstant angenommen werden.

Gemäß einer Ausführungsform der Erfindung wird die aktuelle Temperatur des Kühlmittels kontinuierlich oder in zeitlichen Abständen erfasst und die maximal abrufbare Bremsleistung nur dann begrenzt, wenn die aktuelle Temperatur des Kühlmittels auf einen Wert oberhalb einer vorgegebenen Regeleingriffstemperatur ansteigt. Die Regeleingriffstemperatur kann dann variabel in Abhängigkeit des aktuellen Einlassdruckes beziehungsweise des aktuellen Druckes im Inneren des hydrodynamischen Retarders vorgegeben werden.

Eine weitere vorteilhafte Ausführungsform sieht vor, dass eine Regelzieltemperatur für die Temperatur des Kühlmittels vorgegeben wird, die größer als die Regeleingriffstemperatur ist, und auch die Regelzieltemperatur variabel in Abhängigkeit des aktuellen Einlassdruckes und/oder Druckes im Inneren des hydrodynamischen Retarders vorgegeben wird.

Die Erfindung soll nun nachfolgend anhand der Figuren exemplarisch erläutert werden.

Es zeigen:
- Figur 1: eine schematische Darstellung eines Motorkühlkreislaufs zur Anwendung des erfindungsgemäßen Verfahrens;
- Figur 2: ein schematisches Diagramm einer Dampfdruckkurve des Kühlmittels des Motorkühlkreislaufs.

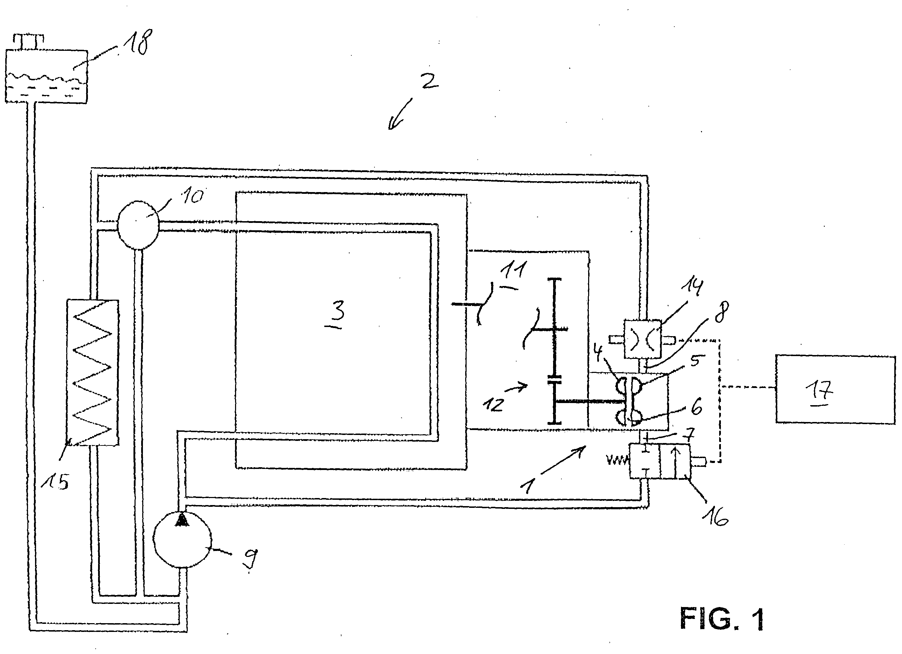

In der Figur 1 ist eine schematische Darstellung eines Motorkühlkreislaufs 2 gezeigt. Vorliegend ist im Motorkühlkreislauf 2 ein hydrodynamischer Retarder 1, umfassend ein Primärschaufelrad 4 sowie ein Sekundärschaufelrad 5, welche einen torusförmigen, über einen Einlass 7 befüllbaren und einen Auslass 8 entleerbaren Arbeitsraum 6 ausbilden, angeordnet. Vorliegend ist das Primärschaufelrad 4 und das Sekundärschaufelrad 5 von einem Gehäuse des Retarders 1 umgeben. Das Kühlmedium des Motorkühlkreislaufs 2 ist dabei gleichzeitig das Arbeitsmedium des hydrodynamischen Retarders 1. Hierbei ist das Sekundärschaufelrad 5 stationär ausgeführt. Alternativ könnte der Retarder 1 auch als Gegenlaufretarder ausgeführt sein. Das Primärschaufelrad 4 wird hier über einen Nebenabtrieb 12 eines Getriebes 11, das mit einer Antriebswelle eines Fahrzeugantriebsmotors 3 in Triebverbindung steht, drehangetrieben. Somit ist der hydrodynamische Retarder 1 als Sekundärretarder ausgeführt und bremst das Fahrzeug in Abhängigkeit der Fahrgeschwindigkeit. Alternativ könnte der Retarder natürlich auch als Primärretarder ausgeführt sein, um das Fahrzeug in Abhängigkeit der Motordrehzahl abzubremsen.

In Strömungsrichtung des Kühlmediums gesehen sind im vorliegenden Falle weiterhin folgende Elemente im Motorkühlkreislauf 2 hintereinander angeordnet, vom Auslass 8 des Retarders 1 aus gesehen: ein Retarderregelventil 14, ein Fahrzeugkühler 15 (Flüssigkeits-Luft-Wärmetauscher), eine Kühlmittelpumpe 9 sowie ein Retardereinlassventil 16. Das Retardereinlassventil 16 und das Retarderregelventil 14 werden mittels einer Steuervorrichtung 17 betätigt, um den Füllungsgrad im Arbeitsraum 6 des hydrodynamischen Retarders 1, also das Befüllen oder Entleeren desselben zu steuern und/oder zu regeln. Dazu wird die Steuervorrichtung 17 derart angesteuert, dass aus einer nicht gezeigten Druckquelle in Abhängigkeit der Primärschaufelraddrehzahl und einem einzustellenden Retarderbremsmoment ein Steuerdruck erzeugt wird, der die beiden Ventile 14 und 16 betätigt. Durch den Steuerdruck wird der Strömungsquerschnitt für Arbeitsmedium der Ventile 14 und 16 variiert, wobei das Ventil 16 in der Regel nur zwischen einer vollständig geschlossenen und einer vollständig geöffneten Stellung schaltbar ist, um den Retarder 1 ein- und auszuschalten, und das Ventil 14 als stetig regelbares Ventil ausgeführt ist, um den Fühlungsgrad im Arbeitsraum 6 gezielt zu variieren.

Im Motorkühlkreislauf 2 ist weiterhin der Fahrzeugantriebsmotor 3 gezeigt sowie ein Thermostat 10 und ein Ausgleichsbehälter 18 angeordnet. Obwohl vorliegend eine Parallelschaltung des hydrodynamischen Retarders 1 und des Fahrzeugantriebsmotors 3 dargestellt ist, könnten diese Aggregate auch in Reihe zueinander im Motorkühlkreislauf 2 angeordnet sein.

Wird der hydrodynamische Retarder 1 nun vom Fahrer aktiviert, zum Beispiel durch Betätigen eines nicht gezeigten Wahlhebels oder eines Bremspedals, so wird, wie ausgeführt mittels der Steuervorrichtung 17 der Öffnungsquerschnitt der Ventile 14, 16 in Abhängigkeit des Steuerdruckes und damit in Abhängigkeit des angeforderten Bremsmomentes variiert. Das vorliegend von der Kühlmittelpumpe 9 geförderte Kühlmittel strömt durch das Retardereinlassventil 16 und den Einlass 7 in den Arbeitsraum 6. Wird dabei das Primärrad 4 über den Nebenabtrieb 12 drehangetrieben, so wird das Drehmoment hydrodynamisch vom Primärschaufelrad 4 auf das feststehende Sekundärschaufelrad 5 übertragen, wodurch das Fahrzeug gebremst wird.

Solange die Temperatur des Kühlmittels unterhalb einer vorgegebenen Regeleingriffstemperatur liegt, wird das vom Fahrer (oder einer Steuervorrichtung) angeforderte Bremsmoment eingestellt. Hierzu kann die Temperatur des Kühlmittels über einen geeigneten Temperatursensor (nicht gezeigt) erfasst werden. Erst wenn die Temperatur des Kühlmittels die Regeleingriffstemperatur erreicht oder überschreitet, beginnt die erfindungsgemäße Temperaturabregelung. Bei einer solchen Temperaturabregelung beziehungsweise Begrenzung der maximal abrufbaren Bremsleistung des Retarders 1 wird der Überdruck im Kühlsystem erfasst, beispielsweise mittels eines Drucksensors im Ausgleichsbehälter 18. Zusätzlich wird die Drehzahl der Kühlmittelpumpe 9 erfasst, entweder direkt über einen entsprechenden Drehzahlsensor oder indirekt über die Drehzahl des Fahrzeugantriebsmotors 3, welcher die Kühlmittelpumpe 9 antreibt. Entsprechendes gilt für die Drehzahl des hydrodynamischen Retarders 1, somit des Primärschaufelrades 4, welche durch einen Sensor erfasst oder aus der Drehzahl des Fahrzeugantriebsmotors 3 bestimmt werden kann. Schließlich kann der Steuerdruck (p_{Y}) der Steuervorrichtung 17 neben den zuvor genannten Größen - Überdruck im Kühlsystem, Kühlmittelpumpendrehzahl und Retarderdrehzahl - für die Berechnung des Einlassdruckes im Retarder 1, das heißt des aktuellen Druckes im Bereich des Einlasses 7 verwendet werden und das maximal abrufbare Bremsmoment in Abhängigkeit dieses Einlassdruckes eingestellt werden.

Alternativ kann im Bereich des Einlasses 7 (oder an einer anderen Stelle), insbesondere vor ein Drucksensor vorgesehen sein, um den Einlassdruck direkt oder indirekt zu erfassen. Zusätzlich oder alternativ könnte ein solcher Drucksensor auch im Inneren des Retarders 1, insbesondere innerhalb von dessen Gehäuse vorgesehen sein und beispielsweise den Gehäuseinnendruck erfassen.

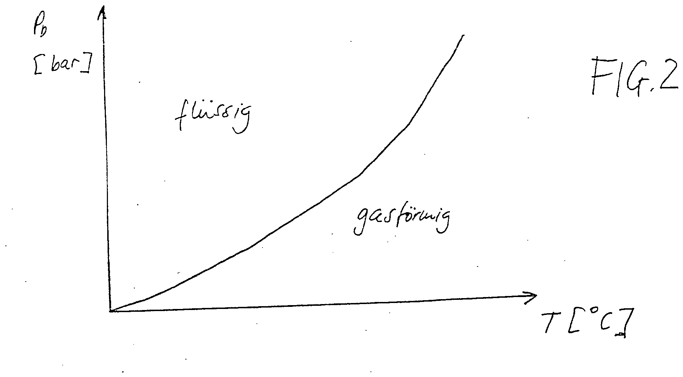

Gemäß der Vorgabe der Figur 2, welche eine Dampfdruckkurve des Kühlmittels (hier ein Wasser-Glykol-Gemisch) darstellt, wird zur Einstellung des maximal abrufbaren Bremsmomentes der Dampfdruck des Kühlmittels berücksichtigt. Dabei ist in Figur 2 auf der Abszisse die Temperatur des Kühlmediums in Grad Celsius und auf der Ordinate der Dampfdruck p_{D} aufgetragen. Wie man aus der Figur 2 entnehmen kann, steigt mit zunehmenden Temperaturen auch der Dampfdruck des Kühlmittels p_{D}, wobei unterhalb der Kurve das Kühlmittel in einem gasförmigen Zustand und oberhalb dieser in einem flüssigen Zustand vorliegt. Gemäß einer bevorzugten Ausführungsform des Verfahrens wird die maximale Bremsleistung des hydrodynamischen Retarders derart begrenzt, dass ein Unterschreiten des Dampfdruckes des Kühlmittels beispielsweise im Bereich des Einlasses 7 des hydrodynamischen Retarders 1, welches ein lokales Verdampfen des Kühlmittels zur Folge hätte, sicher verhindert wird. Dies wird dadurch erreicht, dass die maximal abrufbare Bremsleistung derart eingestellt wird, dass der Einlassdruck bei der entsprechenden Temperatur stets einen Wert oberhalb des in Figur 2 dargestellten Dampfdruckes p_{D} einnimmt. Anstelle des Dampfdruckes kann die Siedetemperatur des Kühlmittels in Abhängigkeit des Einlassdruckes bestimmt werden und die Begrenzung derart ausgeführt werden, dass die Temperatur des Kühlmittels stets kleiner als die Siedetemperatur bei dem aktuellen Einlassdruck ist.

Die in Figur 2 dargestellte Dampfdruckkurve kann in der Steuervorrichtung 17 als Kennfeld hinterlegt sein, welches der aktuell vorliegenden Primärschaufelraddrehzahl und einem wenigstens eine Bremsstufe darstellenden, einzustellenden maximal abrufbaren Retarderbremsmoment einen Steuerdruck zum Einstellen eines Füllungsgrades im Arbeitsraum 6 zuordnet.

Zum Erzeugen des zugeordneten Steuerdruckes wird in Abhängigkeit der aktuell vorliegenden Primärschaufelraddrehzahl aus dem Kennfeld das maximal abrufbare Retarderbremsmoment eingestellt, wobei zum Einstellen des Steuerdruckes der aktuelle Einlassdruck und die Temperatur des Kühlmittels beispielsweise im Bereich des Einlasses 7 des hydrodynamischen Retarders 1 erfasst oder berechnet werden. Die Temperatur und der aktuelle Einlassdruck wird mit korrespondierenden Werten der im Kennfeld hinterlegten Dampfdruckkurve des Kühlmittels verglichen. Anschließend wird der Steuerdruck derart eingestellt, dass ein Verdampfen des Kühlmittels im Bereich des Einlasses und/oder im Inneren des hydrodynamischen Retarders 1 noch sicher verhindert wird. Dazu wird der Steuerdruck so eingestellt, dass der am Einlass 7 oder im Gehäuse anstehende Druck oberhalb der Dampfdruckkurve p_{D} des Kühlmittels liegt.

Mittels des erfindungsgemäßen Verfahrens ist es somit möglich, die lokale Bildung von Dampfblasen im Inneren des hydrodynamischen Retarders effektiv zu verhindern. Hierdurch wird ein kurzfristiger Einbruch des Bremsmomentes des hydrodynamischen Retarders vermieden.

### Bezugszeichenliste

- 1: hydrodynamischer Retarder
- 2: Motorkühlkreislauf
- 3: Fahrzeugantriebsmotor
- 4: Primärschaufelrad
- 5: Sekundärschaufelrad
- 6: Arbeitsraum
- 7: Einlass
- 8: Auslass
- 9: Kühlmittelpumpe
- 10: Thermostat
- 11: Getriebe
- 12: Nebenabtrieb

- 14: Retarderregelventil
- 15: Fahrzeugkühler
- 16: Retardereinlassventil
- 17: Steuervorrichtung
- 18: Ausgleichsbehälter

## Patentansprüche

1. Verfahren zum Begrenzen der maximal abrufbaren Bremsleistung eines hydrodynamischen Retarders (1) in einem Kraftfahrzeug, das einen Fahrzeugantriebsmotor (3) aufweist, wobei die von dem hydrodynamischen Retarder (1) erzeugte Wärme mittels einem Kühlmittel in einen Motorkühlkreislauf (2) des Fahrzeugantriebsmotors (3) abgeleitet wird, und das Kühlmittel im Motorkühlkreislauf (2) umgewälzt wird, wobei
1.1 der hydrodynamische Retarder (1) ein angetriebenes Primärschaufelrad (4) und ein Sekundärschaufelrad (5) aufweist, die miteinander einen torusförmigen, wahlweise über einen Einlass (7) mit Arbeitsmedium befüllbaren und über einen Auslass (8) entleerbaren Arbeitsraum (6) ausbilden, um Drehmoment hydrodynamisch vom Primärschaufelrad (4) auf das Sekundärschaufelrad (5) zu übertragen; wobei
1.2 das Kühlmedium des Motorkühlkreislaufs (2) zugleich das Arbeitsmedium des hydrodynamischen Retarders (1) ist;
mit den folgenden Schritten:
1.3 es wird der aktuelle Einlassdruck im Bereich des Einlasses (7) und/oder im Inneren des hydrodynamischen Retarders (1) erfasst oder aus wenigstens einer weiteren Zustandgröße des Kühlmittels berechnet;
**dadurch gekennzeichnet, dass**
1.4 die maximal abrufbare Bremsleistung des hydrodynamischen Retarders (1) in Abhängigkeit des aktuellen Einlassdruckes vermindert wird; und
1.5 die Siedetemperatur des Kühlmittels in Abhängigkeit des Einlassdruckes bestimmt wird und die maximal abrufbare Bremsleistung des hydrodynamischen Retarders (1) derart begrenzt wird, dass die Temperatur des Kühlmittels kleiner als die Siedetemperatur bei dem aktuellen Einlassdruck ist.

2. Verfahren gemäß Anspruch 1, **dadurch gekennzeichnet, dass** die aktuelle Temperatur des Kühlmittels kontinuierlich oder in zeitlichen Abständen erfasst wird und die maximal abrufbare Bremsleistung nur dann begrenzt wird, wenn die aktuelle Temperatur des Kühlmittels auf einen Wert oberhalb einer vorgegebenen Regeleingriffstemperatur ansteigt, und die Regeleingriffstemperatur variabel in Abhängigkeit des aktuellen Einlassdruckes vorgegeben wird.

3. Verfahren gemäß einem der Ansprüche 1 oder 2, **dadurch gekennzeichnet, dass** der Einlassdruck aus einer oder mehrerer der folgenden erfassten oder berechneten Größen berechnet wird:
- Überdruck im Motorkühlkreislauf (2);
- aktuelle Drehzahl einer im Motorkühlkreislauf (2) angeordneten und das Kühlmittel umwälzenden, vom Fahrzeugantriebsmotor (3) oder einem anderen Motor angetriebenen Kühlmittelpumpe (9);
- Steuerdruck zum veränderbaren Einstellen eines Füllungsgrades von Arbeitsmedium im Arbeitsraum (6) des hydrodynamischen Retarders (1);
- aktuelle Drehzahl des Primärschaufelrades (4) des hydrodynamischen Retarders (1) oder einer mit dem Primärschaufelrad (4) in Triebverbindung stehenden Welle.

4. Verfahren gemäß Anspruch 3, **dadurch gekennzeichnet, dass** der Steuerdruck und die Drehzahl des Primärschaufelrades (4) als konstanter Wert vorgegeben werden.

5. Verfahren gemäß einem der Ansprüche 2 bis 4, **dadurch gekennzeichnet, dass** eine Regelzieltemperatur, für die Temperatur des Kühlmittels vorgegeben wird, die größer als die Regeleingriffstemperatur ist, und auch die Regelzieltemperatur variabel in Abhängigkeit des aktuellen Einlassdruckes vorgegeben wird.

## Claims

1. Method for limiting the maximum retrievable braking power of a hydrodynamic retarder (1) in a motor vehicle which has a vehicle drive motor (3), wherein the heat generated by the hydrodynamic retarder (1) is dissipated by means of a coolant in a motor cooling circuit (2) of the vehicle drive motor (3) and the coolant is circulated in the motor cooling circuit (2), wherein
1.1 the hydrodynamic retarder (1) has a driven primary blade wheel (4) and a secondary blade wheel (5), which together form a toroidal working chamber (6) which is selectively able to be filled with working medium via an inlet (7) and to be emptied via an outlet (8), in order to transmit torque hydrodynamically from the primary blade wheel (4) to the secondary blade wheel (5); wherein
1.2 the coolant of the motor cooling circuit (2) is simultaneously the working medium of the hydrodynamic retarder (1);
having the following steps:
1.3 the present inlet pressure in the region of the inlet (7) and/or in the interior of the hydrodynamic retarder (1) is detected or is calculated from at least one further state variable of the coolant; **characterized in that**
1.4 the maximum retrievable braking power of the hydrodynamic retarder (1) is reduced in a manner dependent on the present inlet pressure; and
1.5 the boiling temperature of the coolant is determined in a manner dependent on the inlet pressure and the maximum retrievable braking power of the hydrodynamic retarder (1) is limited such that the temperature of the coolant is less than the boiling temperature at the present inlet pressure.

2. Method according to Claim 1, **characterized in that** the present temperature of the coolant is detected continuously or at time intervals and the maximum retrievable braking power is limited only if the present temperature of the coolant rises to a value above a predefined regulating intervention temperature, and the regulating intervention temperature is predefined variably in a manner dependent on the present inlet pressure.

3. Method according to either of Claims 1 and 2, **characterized in that** the inlet pressure is calculated from one or more of the following detected or calculated variables:
- positive pressure in the motor cooling circuit (2) ;
- present rotational speed of a coolant pump (9) which is arranged in the motor cooling circuit (2) and circulates the coolant and is driven by the vehicle drive motor (3) or some other motor;
- control pressure for the variable setting of a degree of filling of working medium in the working chamber (6) of the hydrodynamic retarder (1) ;
- present rotational speed of the primary blade wheel (4) of the hydrodynamic retarder (1) or of a shaft which is connected in terms of drive to the primary blade wheel (4).

4. Method according to Claim 3, **characterized in that** the control pressure and the rotational speed of the primary blade wheel (4) are predefined as a constant value.

5. Method according to one of Claims 2 to 4, **characterized in that** a regulating target temperature for the temperature of the coolant is predefined and is greater than the regulating intervention temperature, and the regulating target temperature is also predefined variably in a manner dependent on the present inlet pressure.

## Revendications

1. Procédé de limitation de la puissance de freinage maximale invocable d'un ralentisseur hydrodynamique (1) dans un véhicule automobile, lequel possède un moteur de propulsion de véhicule (3), la chaleur générée par le ralentisseur hydrodynamique (1) étant évacuée au moyen d'un fluide de refroidissement dans un circuit de refroidissement de moteur (2) du moteur de propulsion de véhicule (3), et le fluide de refroidissement étant mis en circulation dans le circuit de refroidissement de moteur (2),
1.1 le ralentisseur hydrodynamique (1) possédant une roue à aubes primaire (4) entraînée et une roue à aubes secondaire (5) qui forment ensemble un espace de travail (6) de forme torique, pouvant sélectivement être rempli avec un fluide de travail par le biais d'une entrée (7) et vidé par le biais d'une sortie (8), pour transmettre un couple de manière hydrodynamique de la roue à aubes primaire (4) à la roue à aubes secondaire (5) ;
1.2 le fluide de refroidissement du circuit de refroidissement de moteur (2) étant en même temps le fluide de travail du ralentisseur hydrodynamique (1) ; comprenant les étapes suivantes :
1.3 la pression d'entrée actuelle dans la zone de l'entre (7) et/ou à l'intérieur du ralentisseur hydrodynamique (1) est détectée ou calculée à partir d'au moins une grandeur d'état supplémentaire du fluide de refroidissement ;
**caractérisé en ce que**
1.4 la puissance de freinage maximale invocable du ralentisseur hydrodynamique (1) est réduite en fonction de la pression d'entrée actuelle ; et
1.5 la température d'ébullition du fluide de refroidissement est déterminée en fonction de la pression d'entrée et la puissance de freinage maximale invocable du ralentisseur hydrodynamique (1) est limitée de telle sorte que la température du fluide de refroidissement est inférieure à la température d'ébullition avec la pression d'entrée actuelle.

2. Procédé selon la revendication 1, **caractérisé en ce que** la température actuelle du fluide de refroidissement est acquise continuellement ou à intervalles dans le temps et la puissance de freinage maximale invocable n'est limitée que lorsque la température actuelle du fluide de refroidissement augmente à une valeur supérieure à une température d'action de régulation prédéfinie, et la température d'action de régulation est prédéfinie de manière variable en fonction de la pression d'entrée actuelle.

3. Procédé selon l'une des revendications 1 ou 2, **caractérisé en ce que** la pression d'entrée est calculée à partir d'un ou plusieurs des grandeurs acquises ou calculées ci-après :
- surpression dans le circuit de refroidissement de moteur (2) ;
- vitesse de rotation actuelle d'une pompe à liquide de refroidissement (9) disposée dans le circuit de refroidissement de moteur (2) et mettant le liquide de refroidissement en circulation, entraînée par le moteur de propulsion de véhicule (3) ou un autre moteur ;
- pression de commande destinée au réglage modifiable d'un niveau de remplissage de l'espace de travail (6) du ralentisseur hydrodynamique (1) avec le fluide de travail ;
- vitesse de rotation actuelle de la roue à aubes primaire (4) du ralentisseur hydrodynamique (1) ou d'un arbre se trouvant en liaison motrice avec la roue à aubes primaire (4).

4. Procédé selon la revendication 3, **caractérisé en ce que** la pression de commande et la vitesse de rotation de la roue à aubes primaire (4) sont prédéfinies en tant que valeur constante.

5. Procédé selon l'une des revendications 2 à 4, **caractérisé en ce qu'**une température cible de régulation est prédéfinie pour la température du liquide de refroidissement, laquelle est supérieure à la température d'action de régulation, et la température cible de régulation est elle aussi prédéfinie de manière variable en fonction de la pression d'entrée actuelle.
